# EUROPEAN PATENT SPECIFICATION

(11) **EP 3 433 102 B1**
(45) Date of publication and mention of the grant of the patent: **10.07.2024**
(21) Application number: 17770711.4
(22) Date of filing: 22.03.2017
(51) Int. Cl.: B32B 37/22, B32B 3/18

(54) **METHOD AND MACHINE FOR FORMING A HOLLOW BOARD MEMBER**
VERFAHREN UND MASCHINE ZUR FORMUNG EINES HOHLEN BRETTELEMENTS
PROCÉDÉ ET MACHINE POUR FORMER UN ÉLÉMENT DE PANNEAU CREUX

(30) Priority: 23.03.2016 SE 1650385
(43) Date of publication of application: 30.01.2019
(73) Proprietor: Inter IKEA Systems B.V., 2616 LN Delft (NL)
(72) Inventor: PETTERSSON, Dan, 34143 Ljungby (SE); ANDREASSON, Bengt, 423 53 Torslanda (SE); CARLANDER, Rolf, 423 63 Torslanda (SE); ANDREASSON, Tomas, 423 53 Torslanda (SE)
(74) Representative: Ström & Gulliksson AB
(86) International application number: PCT/SE2017/050273
(87) International publication number: WO 2017/164800

(56) References cited:
- EP-A1- 1 977 869
- EP-A1- 2 990 171
- WO-A1-2010/049418
- WO-A2-2010/069993
- DE-A1- 102014 214 035
- US-A- 2 372 617
- US-A1- 2013 333 839
- US-B2- 8 999 094

## Description

### TECHNICAL FIELD

This invention relates to a machine and a method of forming an at least partly hollow board material, according to the preamble of claim 18.

Such a machine is known from the document US2372617 A.

### BACKGROUND ART

In furniture manufacturing, for example, low weight elements are widely used. Such elements may consist of a hollow body having two parallel large sheets spaced apart by a lightweight filling material. One suitable lightweight filling material is formed by strips of a wooden material, preferably a material selected among High Density Fiberboard (HDF) and Medium Density Fiberboard (MDF). The strips extend widthwise between the two sheets of the hollow body and the edges of the strips are glued to the two sheets.

Such low weight elements can be used as building elements, door panels, and a large variety of furniture elements. Consequently, a plurality of manufacturing methods for such low weight elements have been presented.

WO 2010/049418 A1 discloses a laminated board, a furniture element including the laminated board, and a method of and a machine for manufacturing the laminated board. The laminated board comprises a board material having a foil laminated to one side and on the other side an elongate groove extending to the laminating foil. Upon folding the board material along the groove, a corner or an edge is formed. To ensure that the formed edge has an even surface, the groove is a groove with an x-shaped cross-section, whereby a normal corner/edge of 90 degrees is beveled to form two corners/edges of 135 degrees. If desired, it is also possible to give the innermost portion of the x-shaped cross-section such a shape that a single rounded corner is formed.

US 8,999,094 discloses a method of continuous manufacture of a composite hollow board material comprising first and second surfaces with distance members in between providing material for the first surface from a first reel and material for the second surface from a second reel towards the output lane; and providing material for the distance members from a third reel such that the distance members comprises strips arranged in a meandering pattern, and continuous along an output lane.

### SUMMARY OF THE INVENTION

The object of the present invention is to provide a cost-efficient method and a machine for producing low weight building elements for furniture, which is achieved in accordance with a method and machine, receptively, as defined in the independent claims.

Hence, a method of forming an at least partly hollow board material includes supplying medium or high density fiber board (MDF, HDF) wound up on at least one board element roll, unwinding the medium or high density fiber board from the roll to form a web of fibrous sheet, flattening the web of fibrous sheet to form at least a first flat fiber board element, attaching spacing elements on the first flat fiber board element, and attaching at least a second flat fiber board element on top of the spacing elements to form a hollow board having the first and second fiber board elements connected to each other by means of the spacing elements.

Thanks to supplying the medium or high density fiber board wound up on at least one board element roll and then unwinding the board from the roll to form at least a part of a web of fibrous sheet, flattening the web and using it for forming the partly hollow board material it is possible to achieve a very cost efficient production.

Furthermore, there is provided a hollow board material forming machine which comprises at least one unwinding station for unwinding a medium or high density fiber board (MDF, HDF) from at least one board element roll to form a web of fibrous sheet, a flattening station for flattening the web of fibrous sheet to form at least a first flat fiber board element, a spacing element forming station for forming spacing elements on the first flat fiber board element, and a second flat board attaching station for applying a second flat fiber board element on top of the spacing elements to form a hollow board.

This machine provides for very efficient forming of hollow board material.

According to one aspect both the first and the second flat fiber board elements are formed by unwinding medium and/or high density fiber board from one or more rolls. This makes the production even more efficient, since both flat fiber board elements are formed by being unwound from board element roll/-s.

According to further aspects a common board element roll is used to provide for more than one side of the hollow board material to be produced. Hence, for example, first and second flat fiber board elements may originate from one and the same board element roll, wherein one web of fibrous sheet comprises both the first and the second board element. Preferably, the second board element is folded onto the first board element. This provides for a further simplified production process.

According to one aspect said medium and/or high density fiber board (MDF, HDF) at least partly has a density of more than 750 kg/m³. This provides for a mechanically very strong hollow board material, with a low weight. Even more preferably said fiber board at least partly includes high density fiber board (HDF) having a density of at least 800 kg/m³, thereby giving an even stronger hollow board material.

According to one aspect that surface of the fiber board which is to form a face facing outwardly in the hollow board material has a surface roughness (Ra) of less than 6 micrometers. This provides for high quality surface suitable for being lacquered, and/or for being provided with a thin foil.

According to a preferred aspect of the invention more than one board element roll is used in combination to facilitate cost efficiency and increased flexibility, wherein preferably one of the webs of fibrous sheet from one of the rolls is used to produce spacing elements and/or laths, by means of slitting the web into adapted sliced fiber board members. This provides for an efficient manner of forming spacing elements.

According to a further aspect the exchange of board element rolls may be achieved automatically and during operation. This provides for higher production rates, since it is not necessary to stop production to replace an empty board element roll.

According to further aspects it is preferred to use means for flattening the web of fibrous sheet including the medium or high density fiber board prior to attaching the second flat fiber board element on top of the first flat board element. Preferably said flattening involves heating. An advantage of this embodiment is that a very flat hollow board material can be produced, starting from a medium or high density fiber board that is unwound from a board element roll, and is then flattened. Heating of the web of fibrous sheet tends to be most efficient if heating that side of the medium or high density fiber board that was facing outwardly when the medium or high density fiber board (MDF, HDF) was wound up on the at least one board element roll. If both sides of the fiber board are heated, then preferably the side of the fiber board that was facing outwardly is heated more than the side that was facing inwardly. Heating is preferably performed by an IR-arrangement, as the latter is efficient in quickly transmitting heat to a moving web of fibrous sheet. Heating is controlled in relation to the present amount of medium or high density fiber board (MDF, HDF) on the at least one board element roll, such that a larger amount of heat is supplied to the web of fibrous sheet when the board element roll is almost empty, i.e. fiber board is unwound at a small diameter, than when the roll is almost full, i.e. fiber board is unwound at a large diameter. Thereby, flattening effect is controlled to fit the current need.

According to further aspects according to the invention the production of hollow board material according to the invention is achieved by using a production line in two different horizontal planes. Thereby, the production line can be made compact and short, reducing the requirement for space.

According to one aspect spacing elements are attached to the first flat fiber board element by using an adhesive, e.g. a glue. Furthermore, the step of attaching the second flat fiber board element to the spacing elements may also involve using an adhesive, such as a glue.

According to one aspect at least some of the spacing elements have the form of strips. Strips provide for obtaining a strong hollow board material, yet with a low weight. According to one aspect the strips could be cut from board material, for example a board material wound up on a roll. This provides for efficient production of the spacing elements.

According to one embodiment medium or high density fiber board is unwound from the at least one board element roll in a first horizontal plane, the web of fibrous sheet then being moved vertically to a second horizontal plane, being different from said first horizontal plane, and being forwarded horizontally in a second direction, at least during the step of forming spacing elements on the first flat fiber board element, and the step of attaching at least a second flat fiber board element on top of the spacing elements to form a hollow board. Preferably, the first direction is opposite to the second direction. This provides for a particularly compact arrangement for forming the hollow boards.

According to one aspect a foil, such as a paper or polymer foil, is applied to the web of fibrous sheet after said step of the fiber board being unwound from the board element roll and before said step of forming spacing elements on the first flat fiber board element, said foil forming an outer surface of at least a part of the produced hollow board. This provides for an efficient attachment of a foil, so that a hollow board with a foliated surface may be obtained. When a web of fibrous sheet is first moved in a first direction and then in a second direction, it is preferred that the foil is applied as the web of fibrous sheet is moved in the first direction, since then the web of fibrous sheet is already foliated when being moved in the second direction and being exposed to the final steps of forming a hollow board.

According to one aspect the web of fibrous sheet is exposed to a surface energy treatment device, such as a flaming treatment, corona treatment or plasma treatment device. An advantage of the surface energy treatment is that various items, such as a foil and/or distance elements, can be attached more securely to the web of fibrous sheet.

Further preferred aspects according to the invention will become apparent from the detailed description below.

### BRIEF DESCRIPTION OF THE DRAWINGS

In the following, the invention will be described in more detail with reference to preferred embodiments and the appended drawings.
- Fig. 1: is a plan view of one end of an embodiment of a produced building element with the top side made invisible for better clarity.
- Fig. 2: is an end view of the building element of Fig. 1.
- Fig. 3: is an end view of part of a fibrous sheet with grooves, which part can be folded and pressed to form the left hand side of the building element, in figs 1 and 2.
- Fig. 4: is a schematic view of a machining line according to a preferred embodiment of the invention.
- Fig. 5: is a perspective view showing a selective strip coating apparatus having a pressing arrangement for pressing clusters of strips together to form sandwiched rod structures.
- Fig. 6: is a perspective view of a portion of a preferred embodiment of a machine for making a sheet unit adapted to be folded over and pressed to produce a low weight building element having two large faces interconnected by spacing elements and having blocks inserted therein, and shows that the machine in this embodiment comprises three buffer devices, three feeding wheels, three pressing members and three conveyors for feeding blocks to the buffer devices.
- Fig. 7: is a perspective view of a preferred embodiment of a cross-cutting circular saw device viewed from the feed side.
- Fig. 8: is a perspective view of a folding over and pressing machine viewed from an intake end of the machine and showing one stage in the folding of the fibrous sheet.

### MODE(S) FOR CARRYING OUT THE INVENTION

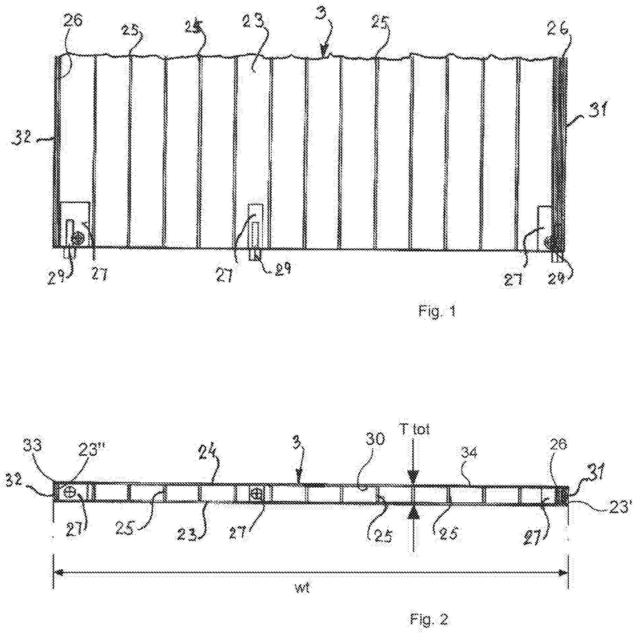

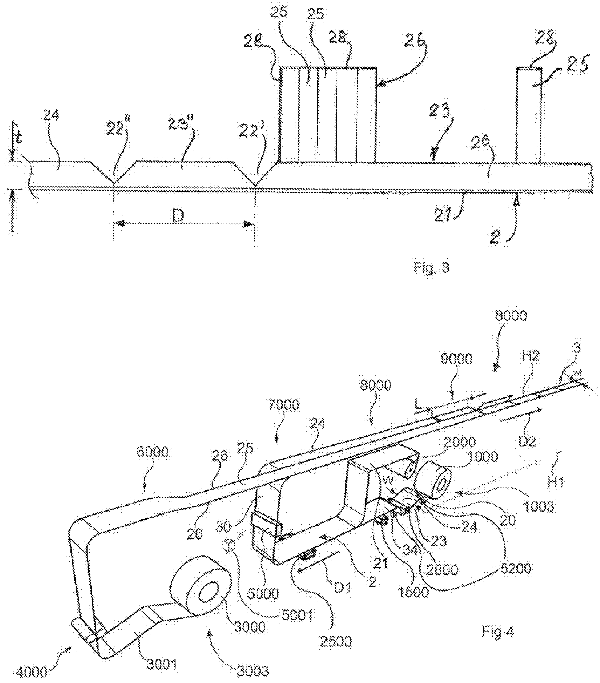

In Figs. 1, 2 and 3 there are shown different views of an exemplary lightweight building element 3 according to the invention, made from a web of fibrous sheet 2. The web of fibrous sheet 2 to be folded over and pressed to form the low weight panel-shaped building element 3 comprises medium density fiber board (MDF) or high density fiber board (HDF) and may optionally be painted or foliated. The web of fibrous sheet 2 preferably has a width W, a length, after cutting, L (both of which are best shown in Fig. 4), and as shown in Fig. 3, a thickness t, specifically adapted to the dimensions of the building element 3, thereby implying a sheet width W of the web of fibrous sheet 2 that is somewhat larger than twice the width wt (Fig. 2) of the building element 3.

"HDF board" as used in the current application means a fiber board material having a density of at least 800 kg/m³. According to a preferred embodiment the HDF board has a density of 850-1050 kg/m³.

"MDF board" as used in the current application means a fiber board material having a density of less than 800 kg/m³. According to a preferred embodiment the MDF board has a density of more than 600 kg/m³ and less than 800 kg/m³, still more preferably the MDF board has a density of more than 750 kg/m³ and less than 800 kg/m³.

The fiber board material may be a mixture of "MDF board" and "HDF board". Preferably, the fiber board material is HDF board in at least one, preferably both, of the board surfaces.

More preferably, also the distance elements are made from or at least partly include HDF board, i.e. having a density of at least 800 kg/m³.

The fiber board material, which is herein below referred to as "board sheet" when used to form a hollow board material, may have a thickness of 0.5-6 mm, more preferably 1-3.5 mm, still more preferably 1.0 to 3.0 mm, most preferably 1.5 to 2.4 mm. These relatively low thicknesses provide for producing a hollow board material with high strength and low weight.

Preferably, that surface of the fiber board forming the outer surface 34 of the hollow board material has a surface roughness, Ra, of less than 6 micrometers, more preferably less than 4 micrometers, to provide a high quality external appearance and/or to provide a good support for a thin foil applied thereto. Preferably, that surface of the fiber board which is to form an inwardly facing face 30 in the hollow board material has a surface roughness, Ra, of less than 7 micrometers, more preferably less than 5 micrometers, to provide good attachment to distance elements.

Preferably the fiber board comprises at least 50 wt%, more preferably at least 80 wt%, of dry wood fibers. While the fiber board may comprise other components, for example scrap plastics, the fiber board becomes stronger, and its behavior more predictable the more wood fibers it comprises. This is beneficial for the strength and humidity resistance of the hollow board material.

The web of fibrous sheet 2 originates from a rolled-up store of medium or high density fiber board, preferably having a desired width W, as will be described in more detail hereinafter. The building element 3 has a predetermined length L that preferably is cut prior to a pressing and folding device, or alternately merely one half 24 of the web of fibrous sheet 2 is cut prior to the pressing and folding device.

The web of fibrous sheet 2 suitably comprises, as best shown in Fig 3, a board sheet 20 made of medium density fiber board (MDF) or high density fiber board (HDF) and having on one side a foil cladding 21 and on the opposite side two lengthwise extending parallel grooves 22', 22" of perpendicularly V-shaped cross-section that are spaced apart from each other a distance D equal to an intended thickness Tₜₒₜ (Fig. 2) of the building element to form a first half 23 and a second half 24 adapted to form the building element 3. The grooves 22', 22" permit the web of fibrous sheet 2 to be bent 90 degrees two times to position the second half 24 on top of the first half 23. Thus, in addition to said first and second halves 23 and 24, the web of fibrous sheet 2 has an intermediate first elongate portion 23' and a second elongate portion 23" which are bounded by grooves 22', 22" and adapted to form a first short side 31 and a second short side 32 of the building element 3 (Figs. 1, 2). Further, the first half 23 carries spacing ribs 25, laths 26, and blocks 27 for providing a desired strength, function and thickness of the building element 3, wherein ribs, laths and blocks 25, 26, 27 forming spacing elements carry an adhesive 28 (Fig. 3) for fixing the second half 24 to the spacing elements 25, 26, 27 in a finished building element 3. As alternative to, or in combination with being applied on the spacing elements 25, 26, 27, adhesive may also be applied on the second half 24.

In a preferred embodiment, the MDF or HDF board sheet 20 has a thickness of about 1-3 mm, the spacing ribs 25 are board strips of the same thickness and a height of about 10 to about 30 mm standing on their longitudinal edges parallel to the grooves 22', 22", as illustrated in Fig. 3. Each of the laths 26 that support the longitudinal short sides 31, 32 of the building element 3 are preferably formed by gluing together a chosen number of board strips 25 to form such a lath 26, which may also be the case of the block 27. The blocks 27 are fit in spaces between the spacing ribs 25, and are of sufficient size to permit attachment members, e.g. screws 29, as illustrated in Fig. 1, to penetrate and be firmly anchored therein. Thereby the strength and stability of the produced building elements 3 can be increased and the mounting of the building elements 3 in installations by means of screws or other attachment members is made more secure. If desired, it is of course possible to provide more or fewer ribs 25, laths 26 and/or blocks 27 and place them at other locations than shown in the drawings.

In the shown preferred embodiment, the spacing ribs 25 are straight, but as is evident for the skilled person they may be of varying shape/form to fulfil its purpose, e.g. alternatively have a zigzag or wave shape or an interconnected structure, e.g. honey comb structure. The described preferred straight spacing ribs 25 may contribute to a high production rate, and cost efficiency.

The grooves 22', 22" may, for example, be formed in accordance with principles previously known and described in WO 2010/049418, see for example Figs. 2a-2b of that document. Hence, for example, as illustrated in Fig. 3 of the current application grooves 22', 22" may first be formed in a first face 34 (see Fig. 4) of the board sheet 20, prior to any application of a foil cladding 21 thereto. However, as is apparent for the skilled person, the foil cladding 21 may be also applied to the first face 34 prior to forming (e.g. by milling) the grooves 22', 22'.

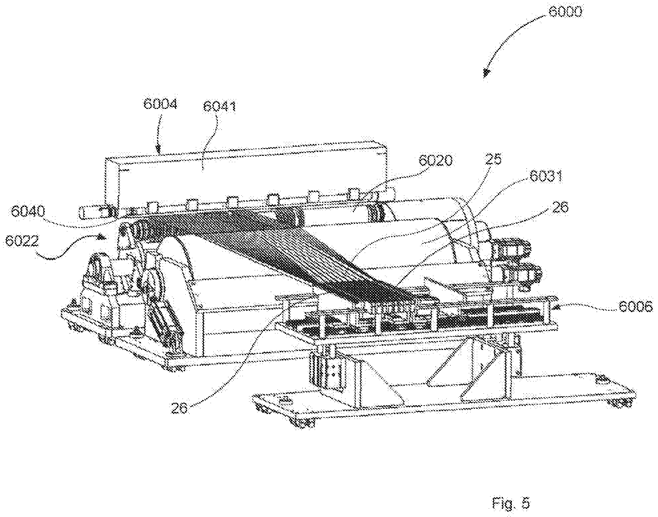

In Fig. 4 there is shown a schematic perspective view of an exemplary production line for the production of a building element 3. In the following some preferred features of such a production line will be described with reference to what is shown in Fig. 4. In the schematic figure of Fig. 4 no laminating rolls nor transfer rolls are shown in order not to blur the figure with too many details. As is evident for the skilled person there exist numerous alternatives that are known per se to achieve the transfer and also the lamination as described. Specific details regarding different steps in the production line will be exemplified with reference to Figs. 5 to 8, which will be described in more detail after first describing the general layout of the production line shown in Fig. 4.

According to one preferred aspect, as shown in Fig. 4, the production line is positioned along two substantially horizontal production floors/planes H1, H2, wherein one production plane H2 is positioned on a higher level, on top of the other production plane H1. Thanks to this arrangement a more compact production line may be achieved.

At the start of the production line there is a first roll 1000, positioned in a first unwinding station 1003, which may be operating according to principles used in other technical areas, such as paper unwinding machinery, e.g. as described in CA1088908 and US4194701. The first roll 1000 carries a wound up continuous web of board sheet 20, of medium density fiber board (MDF) or high density fiber board (HDF), in accordance what is described above. The width W of the web of board sheet 20 is preferably adapted to fit for production of a building element 3 according to the invention, i.e. the board sheet 20 having a width W that is somewhat larger than two times the width wt of the building element 3 to provide an exact fit. Accordingly, the web of board sheet 20 preferably forms all sides of the building element 3, i.e. both a first half 23, i.e. a first board element or first side layer 23, and a second half 24, i.e. a second board element or second side layer 24, as well as a first short side 31 and a second short side 32, illustrated in Figs. 1-3, of the building element 3. The board sheet 20 forms, after being unwound from the first roll 1000, a web of fibrous sheet 2 which will have one surface 30 facing inwards in the building element 3 and one face 34 that will face outwardly (see Fig. 4). This first roll 1000 and the unrolled web of board sheet 20 rolled up thereon are positioned along the first production floor/horizontal plane H1. Hence, a first stage in producing the building element 3 is to unwind the web of board sheet 20 from the roll 1000, in the first unwinding station 1003, to form the web of fibrous sheet 2.

According to a preferred embodiment, the unwinding station 1003 is provided for automatically shifting from an old first roll 1000, about to become empty of the rolled up web of board sheet 20, to a new first roll 1000, which is full of rolled up board sheet 20. Such unwinding station 1003 with automatic joining of the end of the web of board sheet 20 on the old first roll 1000 to the start of the web of board sheet 20 on the new first roll 1000 is per se known from other technical areas, such as paper machinery, and is described in, for example, CA1088908 and US4194701. Thereby, production of building elements 3 may continue continuously, without a need to stop production for replacement of an empty roll 1000.

A second roll 2000 is positioned adjacent the first roll 1000. The second roll 2000 carries a web intended to form a foil 21 on the exterior of the building element 3. The foil 21, which may for example be a plastic foil or a paper foil, will be laminated onto the board sheet 20 prior to a combined web comprising the board sheet 20 with the foil 21 laminated thereon being transferred to the second production floor/horizontal plane H2. Hence, after the lamination the web of fibrous sheet 2 comprises the board sheet 20 with the foil 21 laminated thereon. Preferably the lamination of the foil 21 onto the first web 20 is performed along the production line in level with the first production floor/horizontal plane H1.

In order to obtain a high quality hollow board material that surface of the board sheet 20 which is to form the face 34 facing outwardly in the hollow board material has a surface roughness Ra of less than 6 micrometers. The surface roughness Ra is measured according to ISO 4287-1997. For example an instrument of the type Surtronic 25, available from Taylor-Hobson Ltd, Leicester, GB, can be used to measure the surface roughness. A low surface roughness provides for improved surface quality properties after applying the foil 21 onto the board sheet 20, to form the face 34. More preferably, the surface roughness Ra is less than 4 micrometers on that surface of the board sheet 20 which is to form the face 34 facing outwardly in the hollow board material. This provides for an even better surface quality after applying the foil 21.

Optionally, the web of board sheet 20 may be exposed to a surface energy treatment, such as flaming treatment, corona treatment or plasma treatment, preferably prior to the lamination with the foil 21. For example, a flaming treatment may be conducted at a flame treatment station 1500. The flaming treatment means that at least one surface 30, 34, preferably at least that surface 30 which is facing inwards in the building element 3, or alternatively both surfaces 30, 34 of the board sheet 20, are exposed to a hot flame, for example a natural gas induced flame. The surface energy treatment, such as the flaming treatment, makes the surface of the medium or high density fiber board, MDF, HDF, more susceptible to and suited for the following treatments, including the lamination of the foil 21 and the gluing of the spacing ribs 25 and the laths 26, so that good adhesion is achieved. Preferably, the surface energy treatment, such as the flaming treatment, is made at least in that face 30, the lower face as the situation is in the level H1, of the board sheet 20 onto which the ribs 25 and laths 26 are to be glued.

After lamination with the foil 21, and the optional surface energy treatment, there is preferably performed a milling operation for forming the grooves 22', 22", which were illustrated in more detail in Fig. 3. The milling operation is preferably also performed along the first plane H1 of the production line, for example at a main milling station 2500 operating in accordance with per se known principles of forming grooves 22', 22". Optionally, there may be an additional, second milling station 2800 which is located upstream the location of laminating the foil 21 on the board sheet 20. The second milling station 2800 may mill grooves opposite to the grooves 22', 22" if there is a desire to create a combination of opposite grooves in accordance with the principles of WO 2010/049418, see for example Figs, 5a-c of that document, and the related description. Returning to the current application, the second milling station 2800 is located to cut grooves in the upper surface 34 of the board sheet 20, just before the foil 21 is laminated onto that surface 34, the foil 21 being laminated on top of the grooves according to principles known from WO 2010/049418.

The unwound web of board sheet 20 will, since it is made from medium or high density fiber board, which is a stiff material, still retain a certain tendency to be curved after being unwound from the first roll 1000. Therefore, the web of fibrous sheet 2 comprising the board sheet 20 is flattened after the board sheet 20 being unwound from the first roll 1000.

The flattening can be performed in various manners and in various positions. According to one embodiment the web of fibrous sheet 2 is flattened during the vertical transfer of the web of fibrous sheet 2 from the first plane H1 to the second plane H2. According to one embodiment of flattening the web of board sheet 20, the web of fibrous sheet 2 is exposed to heat, by means of a heating device 5000. Thanks to this heating device 5000, existing tensions in the web of board sheet 20 will be more or less neutralized. In other words, the web of board sheet 20 will have a tendency to be curved from its storage in the form of a roll 1000. As a consequence, the unrolled web of fibrous sheet 2 including board sheet 20 will have a tendency to curl upwardly, striving to make the upper surface 34, which was the inner face when the board sheet 20 was wound up on the roll 1000, and which will be the outer face in the building element 3, concave, and striving to make the lower surface 30, which was the outer face when the board sheet 20 was wound up on the roll 1000, and which will be the inner face in the building element 3, convex.

By supplying heat to the convexing surface 30, which was the outer face when the board sheet 20 was wound up on the roll 1000, this tendency will be counteracted, due to the fact that the heat will urge moist to move away from the heat source, causing expansion of the fibers near the opposite side, face 34, in relation to the heating device 5000, thereby counteracting the curling action. Hence, according to one preferred embodiment heat is only supplied, by means of the heating device 5000, to that surface 30, which was the outer face when the board sheet 20 was wound up on the roll 1000. According to a preferred embodiment the heating device 5000 is an IR-device providing infrared (IR) radiation to provide the heating of the web of board sheet 20.

According to an alternative embodiment (not shown) heat is supplied, by means of the heating device 5000, to both surfaces 30, 34, and the amount of heat supplied to the convexing surface 30 preferably is larger than the amount of heat supplied to the concaving surface 34. By controlling the supply of heat from the heating device 5000 it is possible to eliminate or at least minimize the tensions to thereby form a web that is flattened and thereby more easily handled in a desired manner later on in the production line. Further it may be advantageous to laminate the foil 21 to the web of board sheet 20 from a roll 2000 comprising a foil 21 that curls in an opposite direction, i.e. one roll 1000 is unwound from below and the other 2000 from above, or vice versa.

Alternatively, it is foreseen that the flattening device 5000 can include other flattening arrangements, for example a flattening arrangement could be in the form of rollers, either as a supplement, or in exchange for heating arrangements as described above. As an example Fig. 4 illustrates two optional flattening rollers 5200, illustrated schematically, for supplementing the device 5000 in the flattening of the web of fibrous sheet 2. If rollers 5200 are used as supplements it is evident for the skilled person that they may be applied in various constellations together with an optional appropriate heating arrangement. However, it is also foreseen that the heating may be supplied by means of rollers, and in that connection it is evident that also a large variety of constellations may be used.

The tendency to be curved of the web of board sheet 20 will depend on the radius that the sheet 20 had when being wound up on the first roll 1000. This means that when unwinding a web of fibrous sheet 2 including board sheet 20 from a roll 1000 the tendency to be curved will increase the closer to a centre of a roll 1000 the web of board sheet 20 is located. According to a preferred embodiment the degree of heating of the heating device 5000 is controlled in relation to the present amount of board sheet 20 on the roll 1000, such that a larger amount of heat is supplied to the board sheet 20, and in particular to the convexing surface 30, when the roll 1000 is almost empty, i.e. board sheet 20 is unwound at a small diameter, than when the roll 1000 is almost full, i.e. board sheet 20 is unwound at a large diameter. A control unit 5001 is arranged to control the supply of heat to the board sheet 20 and to supply a larger amount of heat to the board sheet 20 when the roll 1000 is almost empty than when the roll 1000 is almost full.

At the end part of the lower production plane H1 there is positioned a third roll 3000, being a spacing element roll 3000, carrying a fiber web 3001, preferably medium density fiber board (MDF) or high density fiber board (HDF), that will be unwound from the third roll 3000 in a second unwinding station 3003, which may be similar to the first unwinding station 1003. The fiber web 3001 will be used for producing the spacing ribs 25 and laths 26 of the building element 3. In connection with moving this third web 3001, unwound from the third roll 3000 in the second unwinding station 3003 and preferably forwarded vertically upwards, there is a slitting device 4000 used to slit the fiber web 3001 into desired strips, in accordance with any method known per se.

In connection with the third web 3001, with the strips, reaching the second production plane H2 there is positioned a gluing and positioning apparatus 6000, that firstly will apply glue onto desired strips 25, thereafter achieve twisting of the strips 25, as is described and shown in more detail in connection with Fig. 5. Some strips 25 will be glued together to form longitudinal laths 26. Thereafter, or in connection therewith, the laths 26 and strips 25 will be positioned to form supporting laths 26 and ribs 25 according to a desired pattern onto one half 23 of the web of fibrous sheet 2, as is shown and described more in detail below in connection with Fig. 5. In this second production plane H2 the web of fibrous sheet 2 will be moved in a direction D2 that is opposite to the direction D1 of movement of the web of fibrous sheet 2 in the lower production plane H1.

While a preferred method and a machinery for producing distance elements, in the form of strips 25, has been described hereinabove it will be appreciated that other methods and machinery may also be used for this purpose. For example pre-cut strips could be used, or distance elements having other shapes than strip-shape, such as honeycomb structure, could be used.

In order to obtain a high quality hollow board material that surface of the board sheet 20 which is to form the face 30 (see Fig. 4) facing inwardly in the hollow board material has a surface roughness Ra of less than 7 micrometers, according to ISO 4287-1997. A low surface roughness provides for improved accuracy and attachment strength in attaching the spacing strips 25 to the first and second board elements 23, 24 of the board sheet 20. More preferably, the surface roughness Ra is less than 5 micrometers on that surface of the fiber board 20 which is to form the face 30 facing inwardly in the hollow board material.

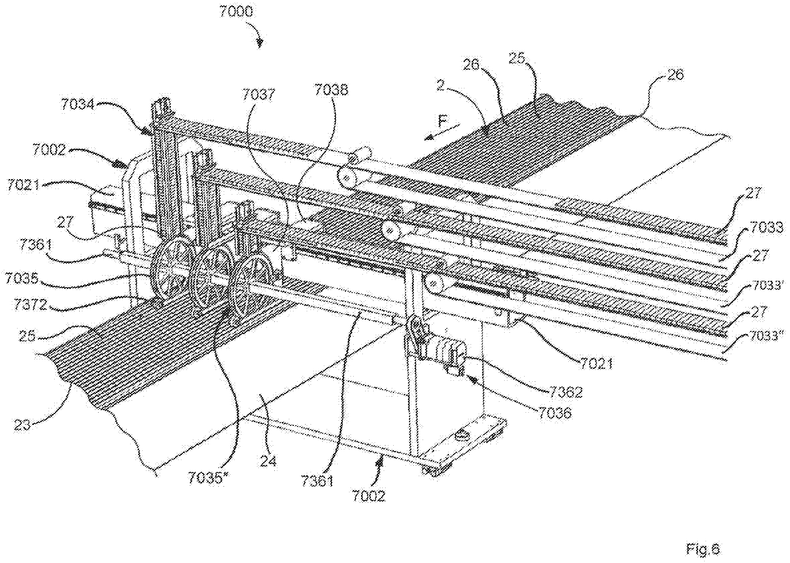

In a next step 7000 the web of fibrous sheet 2 with the ribs 25 and laths 26 applied thereon will be supplied with additional members 27, as shown and described more in detail below in connection with Fig. 6.

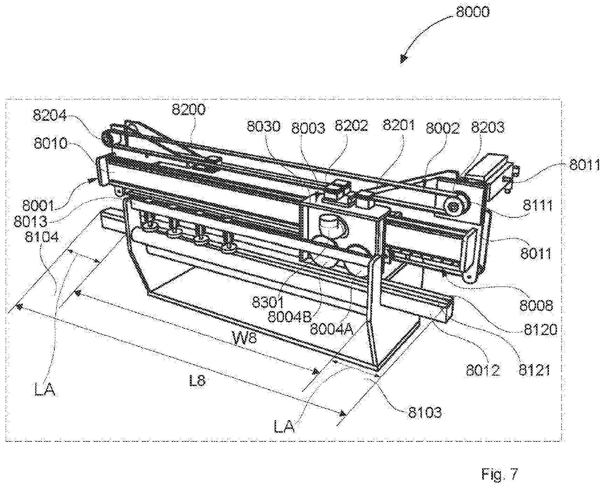

As shown in Fig. 4 thereafter the web will be divided into desired lengths L by means of a cutting apparatus 8000, as shown and described more in detail below in connection with Fig. 7. According to one preferred embodiment the cutting apparatus 8000 cuts, in this position just downstream of the step 7000, just through the second half 24 of the web of fibrous sheet 2, at suitable positions along the length of the web of fibrous web 2, while the first half 23 remains uncut.

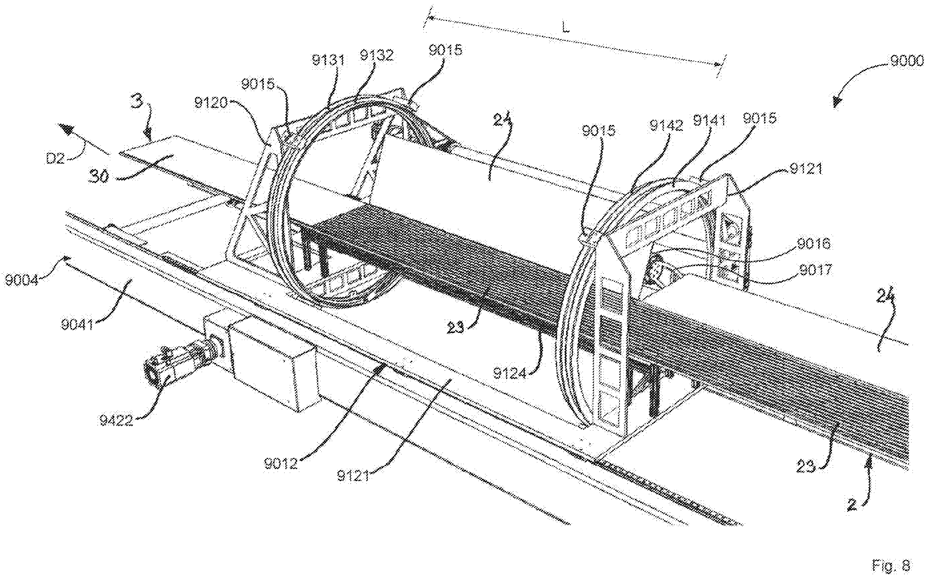

Then, a building element 3 will be formed by means of a folding and pressing unit 9000, wherein the second half 24 of the web of fibrous sheet 2 is folded and pressed around the short sides and on top of the reinforcing ribs 25 and the longitudinal laths 26 arranged on the first half 23, as shown and described more in detail below in connection with Fig. 8.

Finally, a further cutting apparatus 8000, as shown and described more in detail below in connection with Fig. 7, cuts through the building element 3, meaning cutting through the first half 23, the ribs 25 and the laths 26. Optionally, the further cutting apparatus 8000 may cut also through the second half 24, if a length of the building element 3 shorter than the length L is desired. Thereby, a building element 3 as described and shown in Figs. 1-2 has been formed, and is ready for use as, for example, an element of a book shelf, a cupboard, a wardrobe, a chest of drawers, etc.

In Fig. 5 there is shown how to apply a coating of adhesive to the parallel strips of the fiber web 3001 in the gluing and positioning apparatus 6000. A first sub-group of parallel strips is then advanced along a first path between a first 6020 and a second 6031 support members. The first path extends from a first point, being located adjacent to the first support member 6020 and at a first distance from a longitudinal axis of the first support member 6020, to a second point, being located adjacent to the second support member 6031. Simultaneously therewith a second sub-group of parallel strips is advanced along a second path between the first 6020 and second 6031 support members. The second path extends from a third point, that is located adjacent to the first support member 6020 and at a second distance from said longitudinal axis of the first support member 6020, said second distance being shorter than said first distance, to a fourth point adjacent to the second support member 6031. The coating of adhesive is applied by means of a coating device 6004, which in Fig. 5 is represented by a coating roll 6040 included in a coating device 6004. The coating device 6004, and in particular the coating roll 6040, is in coating contact with the first sub-group of parallel strips passing the first support member 6020 at the first distance to coat one side of the strips of the first sub-group with adhesive, while the strips of the second sub-group of parallel strips that simultaneously pass the first support member 6020 at the second distance are out of reach of the coating device 6004, in particular the coating roll 6040, and remain uncoated.

Suitably, the first support member 6020 is provided in the form of a support bar having a plurality of ridge surfaces located at the first distance from the longitudinal axis of the first support member 6020 and a plurality of grooves arranged between the ridge surfaces and located at the second distance from the longitudinal axis of the first support member 6020.

By using a support bar 6020 having a plurality of ridge surfaces and a plurality of grooves between the ridge surfaces, a cost efficient and flexible gluing together of strips to form laths 26 of different dimensions can be achieved.

As best seen in Figs 1 and 2 and especially the enlarged end view in Fig. 3, between groups of glued-together strips forming laths 26, there may be positioned a plurality of single strips, i.e. ribs 25 (unglued), which will serve as spacers/reinforcements in the low weight building member 3. Thereby it is possible to have all the strips that are coated with adhesive and intended to form the laths 26 and also all uncoated strips, both those forming outer parts of a lath 26, and those intended to form single spacing ribs 25, in the right order from the start of the process, all the way from the cutting of strips 25, 26 from the fiber web 3001 at the strip cutting device 4000 to the fixing of all parts 25, 26 to the first half 23 of the web of fibrous sheet 2, downstream of the second support member 6031. Hence, in a preferred process not only the last/outer strip of a lath 26 passes unglued through the gluing and positioning apparatus 6000, but also singlestrips, intended for forming ribs 25, passes unglued, to avoid difficult sorting exercises, which otherwise may be needed.

Thus, downstream of the second support member 6031, the laths 26 are being pressed together by means of a lath pressing arrangement 6006, to form respective laths, each such lath 26 having a sandwiched structure comprising several strips.

The coating device 6004 preferably is an adhesive coating device having a reservoir 6041 for the adhesive 28. The reservoir 6041 has a bottom slot, in which the rotary coating roll 6040 is mounted for transferring the adhesive 28 from the reservoir 6041 to the strips. The roll 6040 forms a bottom of the adhesive coating device 6004, and a first doctor (not shown) makes sure that the downwards facing surface of the roll 6040 carries an adhesive 28 layer of desired thickness. Where the roll 6040 touches the strips, namely the strips of the first sub-group, the adhesive 28 is being transferred to the strips of the first sub-group of strips. Adhesive 28 remaining on the roll 6040 is returned to the reservoir 6041 past a second doctor (not shown), which may be set with a different gap toward the roll 6040 than the first doctor, to supply a desired amount of adhesive as is known per se.

Suitably, the apparatus 6000 is provided with at least two separate support bars or rolls 6020 each of said at least two separate support bars or rolls 6020 having its own unique arrangement of ridge surfaces and grooves, and the apparatus having a selection arrangement, for bringing one of said at least two separate support bars or rolls 6020 at a time into position for functioning as the first support member 6020. Thereby, the apparatus can, as an example, be changed from producing a first type of laths 26 having one combination of width and height, e.g. to form first type of laths being formed from eight strips, each having a strip thickness of 2 mm and a strip width of 12 mm, the lath 26 formed thereby having a lath width of 8 x 2 mm =16 mm and a lath height of 12 mm to produce a second type of lath of another combination of width and height, e.g. to form a second type of laths being formed from 5 strips, each having a strip thickness of 2.5 mm and a strip width of 15 mm, the lath formed thereby having a lath width of 5 x 2.5 mm =12.5 mm and a lath height of 15 mm.

To make the change easily and quickly, the selection arrangement preferably comprises a rotary magazine 6022 holding a plurality of parallel support bars or rolls 6020, the magazine 6022 being a rotary device having a central axis of rotation parallel to central axes of the individual support bars or rolls 6020, and each support bar or roll 6020 suitably has a unique arrangement of ridge surfaces and grooves.

Fig. 6 shows a preferred embodiment of a machine 7000 for positioning of blocks 27 onto the web of fibrous sheet 2, in spaces located between the spacing ribs 25 and/or laths 26.

The first half 23 of the web of fibrous sheet 2 carries the spacing elements 25, 26.

The machine 7000 comprises a first buffer device 7034 for receiving, storing and delivering blocks 27; a first feeding wheel 7035; a drive 7036 for rotating the feeding wheel 7035, which is arranged on a shaft 7361, to fetch a first one of the blocks 27 from the first buffer device 7034 and transfer it to a predetermined position on the moving web of fibrous sheet 2.

In addition, the machine includes a first block conveyor 7033 for feeding blocks 27 to the first buffer device 7034. The solid blocks 27 are, according to one embodiment, of sufficient size to permit attachment screws to penetrate and be firmly anchored therein, and they are of a height that is equal to the height of the spacing ribs 25 to work also as spacing elements in the building element 3. The spacing ribs 25 are spaced apart a distance that is sufficient to permit a block 27 to be placed in the space between them. The blocks 27 can be made of a plurality of materials, if desired wood can be used, but preferably they are made by gluing together board strips substantially along the principles described for the laths 26, and thereafter cut in predetermined lengths The machine 7000 further comprises a glue applicator (not shown) for applying glue to the block 27 or to a predetermined position on the sheet 2; and a press member 7372 for pressing the block 27 against the web of fibrous sheet 2 to fix the blocks 27 in the predetermined position on the sheet 2.

The machine suitably has a feeding cover 7037 that extends around nearly half of the circumference of a feeding wheel 7035 providing the outer part of a feeding channel that provides room for accommodating and guiding the blocks 27. The blocks 27 are carried by recesses in the feeding wheel 7035 all the way from the first buffer device 7034, which suitably is vertical, via the feeding channel to the sheet 1. The feeding cover 7037 has a bottom portion, which includes the first glue applicator (not shown) and the attachment for arms of the press member 7372. The shown press member 7372 is a roller carried by one or between two arms extending from the bottom portion of the feeding cover 7037.

The machine 7000 further comprises a frame 7002 for carrying the various components of the machine. The frame 7002 includes a beam 7021, preferably a box beam, extending across the width of the sheet 2. On two opposite and parallel sides thereof, the beam 7021 has two guide rails. The feeding cover 7037 is provided with a first cover holder 7038 which is movable along the length of the beam 7021 to place the feeding cover 7037 at a desired position across the sheet 2.

The buffer device 7034, the feeding wheel 7035, the cover 7037 with the glue applicator and the press member 7372, and the cover holder are movable as an assembly in the cross direction of the web of fibrous sheet 2 to achieve a desired position for the block 27.

The drawings show a preferred embodiment of the machine 7000 having three such basically identical assemblies, thereby enabling, in this set-up, placing three blocks 27 in parallel on the first half 23 of the web of fibrous sheet 2, but the machine may include another number of such assemblies, if desired. Since the components of the second and third assemblies are very similar to and perform the same functions as those of the first assembly, they have the same basic reference numeral as the components of the first assembly but with the addition of a prime symbol (') and a double prime symbol ("), respectively.

Fig. 7 shows a preferred embodiment of the cross-cutting apparatus 8000. The cross-cutting apparatus 8000 comprises a frame 8001, a guide 8010 carried by the frame 8001 and adapted to span the fibrous sheet 2, or the building element 3, as the case may be, to be cross-cut by sawing, a carriage 8003 mounted for reciprocal movement along the guide 8010, at least one circular saw blade 8004A, 8004B carried by the carriage 8003, and a motor 8011 for moving the carriage 8003 and rotating said at least one saw blade 8004A, 8004B, said motor 8011 being fixed to the frame 8001. The saw device further comprises a first transmission 8002 and a second transmission (not shown).The first transmission 8002 is arranged between the motor 8011 and the carriage 8003 for transforming an output of the motor to a reciprocating movement of the carriage 8003 along the guide 8010, and the second transmission is arranged between the carriage 8003 and the at least one saw blade 8004A, 8004B for transforming the reciprocating movement of the carriage 8003 to a rotation of said at least one saw blade 8004A, 8004B.

The two saw blades preferably are identical and the first saw blade 8004A is mounted so as to rotate in its sawing direction when the first saw blade 8004A is the leading saw blade of the carriage 8003 and in a non-sawing direction when the first saw blade 8004A is the trailing saw blade, and similarly, the second saw blade 8004B is mounted so as to rotate in its sawing direction when the second saw blade 8004B is the leading saw blade of the carriage 8003 and in a non-sawing direction when the second saw blade 8004B is the trailing saw blade. Hence, the first and second saw blades 8004A, 8004B may be of identical type, but are mounted opposite to each other on the carriage 8003.

The motor 8011 has an output shaft 8111 and a reduction gearing (not shown) to reduce the rotational speed of the output shaft, so that a desired travelling speed of the carriage 8003 can be obtained. The first transmission 8002 may be a hydraulic, pneumatic or electric transmission, for example, but suitably it is a mechanical transmission. The first mechanical transmission 8002 preferably includes a reciprocal chain or belt 8200 having two ends 8201, 8202 attached to the carriage 8003, and at least two wheels 8203, 8204 in operative contact with the reciprocal chain or belt 8200, At least one wheel 8203, which preferably is a sprocket or toothed pulley, is fixed to the output shaft 8111, while the other wheel 8204 is mounted rotary on the frame 8001, so that a rotation of the output shaft 8111 causes a movement of the carriage 8003 along the guide 8010.

The second transmission suitably includes a gearing operatively connected between said at least one saw blade 8004A, 8004B and the transmission device mounted on the carriage 8003, said gearing providing a suitable rotational speed for said at least one saw blade 8004A, 8004B. The gearing preferably is a planetary gearing for obtaining a desired rotational speed of said at least one saw blade 8004A, 8004B as shown more in detail in SE 1551326-0.

The guide 8010 has a total length L8 along which the carriage 8003 may travel during its reciprocating movement, and the cutting apparatus 8000 has a width W8 within which the web of fibrous sheet 2 to be cross-cut can be placed, the width W8 being smaller than the total length L8. At each lateral end the guide 8010 has an acceleration section 8103, 8104, where the carriage 8003 is accelerated, so that the carriage 8003 first passes this acceleration section 8103, 8104 before arriving at the sheet 2. A length LA of each acceleration section 8103, 8104 suitably is such that the carriage 8003 during its travel through the acceleration section 8103, 8104 will reach at least 50%, more preferably at least 75 %, of full speed.

According to a preferred concept of driving the saw blades 8004A, 8004B, there is a use of free wheel devices arranged within the second transmission, at the final part of the transmission. This arrangement merely allows powering of each saw blade 8004A, 8004B in one direction. Thanks to this arrangement several advantages are gained. Firstly it saves energy by merely powering one saw blade at a time. Secondly it saves energy by allowing the freewheeling saw blade i.e. that saw blade which is the trailing saw blade, to continue rotating in its "cutting direction", which is opposite to the direction of the leading saw blade, thereby requiring less energy input to accelerate the saw blade at each start of a new cutting stroke, in a reverse direction.

The carriage 8003 suitably includes a housing 8030 surrounding a major portion of said at least one saw blade 8004A, 8004B, and it is also suitable that the housing 8030 has a sawdust outlet 8301 adapted to be connected to a suction device (not shown) for removing sawdust. A holder 8013 for holding the fibrous sheet 2, or the building element 3, to be cross-cut, comprises a plurality of vertical actuators carried by a horizontal beam spanning the width of the sheet 2.

As shown in Fig. 8 the folding and pressing device 9000 comprises a cage-like frame having a first open bracket member 9121 at the inlet end of the press device 9000 and a second open bracket member 9120 at the outlet end to permit the web of fibrous sheet 2 to enter through the opening in the first bracket member 9121 and after folding and pressing be discharged as a finished building element 3 through the opening in the second bracket 9120. These two bracket members 9120 and 9121 are included in a frame 9012.

Further, the folding and pressing device 9000 comprises a first 9131 and a second 9132 ring pulley in a first pair of rotary ring pulleys, and a first 9141 and a second 9142 ring pulley in a second pair of rotary ring pulleys. The four ring pulleys are coaxial and the pairs are spaced from each other a distance that is larger than the length L of the pre-cut sheet 2. The inner diameter of the four ring pulleys 9131, 9132, 9141, 9142 is larger than the width W of the web of fibrous sheet 2 to permit its passage through the ring pulleys.

Bearing assemblies 9015 are arranged for supporting the ring pulleys 9131, 9132, 9141, 9142 radially and axially. In the shown preferred embodiment each ring pulley is supported by four bearing assemblies 9015 spaced around, preferably equidistantly, the periphery of each ring pulley. Each bearing assembly 9015 is attached to the frame 9012 and includes a housing with a plurality of wheels One of the wheels gives radial support to a ring pulley and the at least one other wheel support the ring pulley axially.

Further, the folding and pressing device 9000 comprises a rotary press roll 9016 extending from the first pair of ring pulleys to the second pair.

The folding and pressing device 9000 comprises at each pair of ring pulleys a set of arm members in the form of a link system 9017 as described more in detail in SE 1550962-3. A table 9124 for receiving and supporting the pre-cut web of fibrous sheet 2 is located between the two frame members 9120, 9121.

The folding and pressing device 9000 further comprises a first drive (not shown) for rotating the two first ring pulleys 9131, 9141 and a second drive (not shown) for rotating the two second ring pulleys 9132, 9142. One of the drives is arranged to rotate either the first ring pulleys or the second ring pulleys at a varying speed, compared to the other drive, during a completion of a full turn of the ring pulleys. Thereby, link system 9017 will move the press roll 9016 in a closed loop around the table 9124 for folding over and pressing the sheet 24 to produce the low weight panel-shaped building element 3 having two large faces.

A preferred path of the press roll 9016 includes one part where the press roll first lifts the second half 24. The press roll 9016 is then moved vertically, basically by means of the rotation of the pair of pulleys. Thereafter the link system 9017 will move the press roll 9016 to fold the second half 24 onto the first half 23 and the roll 9016 ending up in a position contacting and pressing on top of the second half 24 adjacent the location where the second half 24 is connected to the first half 23. Thereafter the link system 9017 will make the press roll 9016 move along a horizontal path pressing the second half 24 on to the top of the first half 23. Thereafter the press roll 9016 is positioned in its outermost position. Finally the press roll 9016 is returned in a curved path under the table 9124, to be moved to a start position to close the loop and to be in position for forming a subsequent building element 3.

By controlling the manner in which the first drive rotates the ring pulleys 9131, 9141, and how the speed of rotation is varied during a turn, it is possible to adjust the path of the press roll 9016 and adapt the specific path to forming building elements 3 of varying widths and thicknesses.

To make it more efficient to include the folding and pressing device 9000 in a production line, the frame 9012 is designed to have the form a carriage 9012 for carrying the ring pulleys 9131, 9132, 9141, 9142, press roll 9016, link system 9017, table 9124 and drives, and is adapted to be supported by an elongate support structure 9004 and movable back and forth thereon. The support structure 9004 include two parallel beams 9041, preferably identical, on which the carriage 9012 is movable back and forth driven by a drive mechanism which includes a motor 9422.

The conveyor assembly for transporting board material through the production line and referred to above but not shown in the drawings may be of various types known in the art, but preferably a belt conveyor having a pervious belt is provided for continuously feeding the web of fibrous sheet 2 through the different stages, e.g. into the folding and pressing device 9000. A suction member (not shown) is suitably provided for fixing a portion of sheet 2, e.g. to the table 9124 during handling.

The invention is not limited by the examples mentioned above but may be varied within the scope of the appended claims. For instance, it is evident for the skilled person that the invention may be used for production of the hollow board material wherein one or more sheets of the final product may be supplied directly in the form of a sheet, i.e. not necessarily being supplied from a roll. It is evident for the skilled person that this aspect also applies in relation to the spacing elements and/or laths. Moreover, it is evident for the skilled person that a production line may also be in the form of a single production plane, or more than two production planes.

## Claims

1. A method of forming an at least partly hollow board material, the method including:
supplying medium and/or high density fiber board (MDF, HDF) (20) wound up on at least one board element roll (1000), unwinding the medium and/or high density fiber board (20) from the roll (1000) to form a web of fibrous sheet (2), flattening the web of fibrous sheet (2) to form first and second flat fiber board elements (23, 24), attaching spacing elements (25, 26) on the first flat fiber board element (23), and attaching said second flat fiber board element (24) on top of the spacing elements (25, 26) to form a hollow board (3) having the first and second fiber board elements (23, 24) connected to each other by means of the spacing elements (25, 26).

2. A method according to claim 1, wherein said medium and/or high density fiber board (MDF, HDF) (20) at least partly has a density of more than 750 kg/m³ and wherein that surface of the fiber board (20) which is to form a face (34) facing outwardly in the hollow board material has a surface roughness (Ra) of less than 6 micrometers, preferably said fiber board (20) at least partly includes high density fiber board (HDF) having a density of at least 800 kg/m³.

3. A method according to claim 1 or 2, further comprising forming also the second flat fiber board element (24) by unwinding medium and/or high density fiber board (MDF, HDF) from at least one board element roll (1000).

4. A method according to claim 3, further comprising unwinding the first and the second board elements (23, 24) from a common board element roll (1000) of wound up medium and/or high density fiber board (MDF, HDF), preferably said step of attaching at least a second flat fiber board element (24) on top of the spacing elements (25, 26) involving folding the second flat fiber board element (24) onto the first flat fiber board element (23), with the spacing elements (25, 26) being arranged therebetween.

5. A method according to any one of the preceding claims, further comprising supplying medium and/or high density fiber board (3001) wound up on at least one spacing element roll (3000), unwinding the medium and/or high density fiber board (MDF, HDF) from the spacing element roll (3000), and slitting the fiber board (3001) longitudinally to form said spacing elements (25, 26), in the form of strips of medium and/or high density fiber board (MDF, HDF).

6. A method according to any one of the preceding claims, further comprising automatically and during running operation replacing a board element roll (1000, 3000) about to be empty of fiber board (20) with a full board element roll.

7. A method according to any one of the preceding claims, wherein said step of flattening the web of fibrous sheet (2) involves heating the medium or high density fiber board (20), preferably the heating involves a device (5000) providing infrared (IR) radiation being supplied to the web of fibrous sheet (2).

8. A method according to claim 7, wherein said step of heating the web of fibrous sheet (2), involves heating that side (30) of the medium and/or high density fiber board (20) that was facing outwardly when the medium and/or high density fiber board (MDF, HDF) was wound up on the at least one board element roll (1000).

9. A method according to claim 8, wherein both sides of the web of fibrous sheet (2) are heated, and wherein that side (30) of the web of fibrous sheet (2) having the side (30) of the medium and/or high density fiber board (20) that was facing outwardly when the medium and/or high density fiber board (20) was wound up on the at least one board element roll (1000) is heated to a higher temperature than the other side (34).

10. A method according to any one of claims 7-9, wherein the degree of heating is controlled in relation to the present amount of medium and/or high density fiber board (MDF, HDF) on the at least one board element roll (1000), such that a larger amount of heat is supplied to the web of fibrous sheet (2) when the board element roll (1000) is almost empty, i.e. fiber board (20) is unwound at a small diameter, than when the roll (1000) is almost full, i.e. fiber board (20) is unwound at a large diameter.

11. A method according to any one of the preceding claims, wherein that surface of the fiber board (20) which is to form a face (34) facing outwardly in the hollow board material has a surface roughness (Ra) of less than 6 micrometers, more preferably less than 4 micrometers, preferably that surface of the fiber board (20) which is to form a face (30) facing inwardly in the hollow board material has a surface roughness (Ra) of less than 7 micrometers, more preferably less than 5 micrometers.

12. A method according to any one of the preceding claims, wherein medium and/or high density fiber board (MDF, HDF) is unwound from the at least one board element roll (1000, 3000) in a first horizontal plane (H1), the web of fibrous sheet (2) then being moved vertically to a second horizontal plane (H2), being different from said first horizontal plane (H1), and being forwarded horizontally in a second direction (D2), at least during the step (6000, 7000) of forming spacing elements (25, 26) on the first flat fiber board element (23), and the step of attaching at least a second flat fiber board element (24) on top of the spacing elements (25, 26) to form a hollow board (3).

13. A method according to claim 12, wherein the web of fibrous sheet (2) prior to being moved vertically is forwarded horizontally in a first direction (D1) being opposite to said second direction (D2).

14. A method according to claim 12 or 13, wherein at least two board element rolls (1000, 3000) comprising wound up medium and/or high density fiber board (MDF, HDF) are positioned adjacent said first horizontal plane (H1).

15. A method according to any one of the preceding claims, wherein a foil (21), such as a paper or polymer foil, is applied to the web of fibrous sheet (2) after said step of the fiber board (20) being unwound from the board element roll (1000) and before said step (6000, 7000) of forming spacing elements (25, 26) on the first flat fiber board element (23), said foil (21) forming an outer surface of at least a part of the produced hollow board (3), preferably said foil (21) is applied to that side (34) of the web of fibrous sheet (2) that was facing inwardly when the medium and/or high density fiber board (MDF, HDF) was wound up on the at least one board element roll (1000), preferably the web of fibrous sheet (2) is exposed to a surface energy treatment device (1500), such as a flaming treatment, corona treatment or plasma treatment device, prior to application of the foil (21) to the surface (34).

16. A method according to claims 13 and 15, wherein said foil (21) is applied to the web of fibrous sheet (2) during movement in said first direction (D1).

17. A method according to any one of the preceding claims, wherein medium and/or high density fiber board (MDF, HDF) is unwound from at least two board element rolls (1000, 3000), the board material (3001) from the second roll (3000) being slit to form a plurality of distance elements (25, 26) that are applied on the first flat fiber board element (23), to form a hollow board (3).

18. A hollow board material forming machine, comprising at least one unwinding station (1003) with at least one board element roll (1000) arranged to form a web of fibrous sheet (2), a flattening station (5000) for flattening the web of fibrous sheet (2), a spacing element forming station (4000, 6000, 7000) for attaching spacing elements (25, 26) on the first flat fiber board element (23), and a second flat board attaching station (9000) for attaching said second flat fiber board element (24) on top of the spacing elements (25, 26) to form a hollow board (3), **characterized in that** said board element roll (1000) contains a medium and/or high density fiber board (MDF, HDF) (20) and that said flattening station (5000) is arranged to form first and second flat fiber board elements (23, 24).

19. A machine according to claim 18, further comprising a spacing element (25, 26) unwinding station (3003) for unwinding medium and/or high density fiber board (MDF, HDF) (3001) wound up on at least one spacing element roll (3000), the machine further comprising a spacing element (25, 26) forming station (4000, 6000, 7000) adapted for slitting the unwound fiber board (3001) longitudinally to form the spacing elements (25, 26).

20. A machine according to any one of claims 18-19, wherein said at least one unwinding station (1003, 3003) further comprises a board element roll replacing unit for automatically and during running operation replacing a board element roll (1000, 3000) about to be empty of fiber board (20) with a full board element roll.

21. A machine according to any one of claims 18-20, wherein the flattening station comprises a heating arrangement (5000), preferably an IR-heating arrangement, for heating the web of fibrous sheet (2), preferably the heating arrangement (5000) is adapted for heating that side (30) of the medium or high density fiber board (20) that was facing outwardly when the medium and/or high density fiber board (MDF, HDF) was wound up on the at least one board element roll (1000).

22. A machine according to claim 21, wherein the machine further comprises a control unit (5001) arranged to control the supply of heat to the web of fibrous sheet (2) and to supply a larger amount of heat to the board material (20) when the board element roll (1000) is almost empty than when the roll (1000) is almost full.

23. A machine according to any one of claims 18-22, wherein the machine comprises a folding and pressing device (9000) for folding the second flat fiber board element (24) onto the spacing elements (25, 26) and attaching the second flat fiber board element (24) onto the spacing elements (25, 26), preferably the unwinding station (1003) being arranged to unwind the first and second flat fiber board elements (23, 24) from a common board element roll (1000) upstream of the folding and pressing device (9000).

24. A machine according to any one of claims 18-23, wherein the machine comprises two floors arranged in two horizontal planes (H1, H2) on top of each other, wherein a first plane (H1) comprises the at least one unwinding station (1003, 3003) and the second plane (H2) comprises at least parts of the distance element forming station (6000, 7000) and the second flat board attaching station (9000), wherein the machine is arranged to forward the web of fibrous sheet (2) including the medium or high density fiber board (20) unwound from the at least one board element roll (1000) in a first direction (D1), along said first horizontal plane (H1), in the first floor, and to forward the web of fibrous sheet (2) in a second direction (D2), along said second horizontal plane (H2), which second direction (D2) is opposite to the first direction (D1), in the second floor, wherein preferably the machine is adapted to transfer the web of fibrous sheet (2) vertically from the first plane (H1) to the second plane (H2).

## Patentansprüche

1. Verfahren zum Formen eines zumindest teilweise hohlen Plattenmaterials, wobei das Verfahren umfasst:
Zuführen einer Faserplatte mittlerer und/oder hoher Dichte (MDF, HDF) (20), die auf mindestens einer Plattenelementrolle (1000) aufgewickelt ist, Abwickeln der mittelund/oder hochdichten Faserplatte (20) von der Rolle (1000), um eine Faserplattenbahn (2) zu bilden, Glätten der Faserplattenbahn (2), um erste und zweite flache Faserplattenelemente (23, 24) zu bilden, Anbringen von Abstandselementen (25, 26) auf dem ersten flachen Faserplattenelement (23) und Anbringen des zweiten flachen Faserplattenelements (24) oben auf den Abstandselementen (25, 26), um eine hohle Platte (3) zu bilden, die die ersten und zweiten Faserplattenelemente (23, 24) umfasst, die durch die Abstandselemente (25, 26) miteinander verbunden sind.

2. Verfahren nach Anspruch 1, wobei die Faserplatte mittlerer und/oder hoher Dichte (MDF, HDF) (20) zumindest teilweise eine Dichte von mehr als 750 kg/m³ aufweist und wobei die Oberfläche der Faserplatte (20), die eine nach außen weisende Fläche (34) in dem hohlen Plattenmaterial bilden soll, eine Oberflächenrauhigkeit (Ra) von weniger als 6 Mikrometern aufweist, wobei vorzugsweise die Faserplatte (20) zumindest teilweise eine hochdichte Faserplatte (HDF) mit einer Dichte von mindestens 800 kg/m³ umfasst.

3. Verfahren nach Anspruch 1 oder 2, bei dem auch das zweite flache Faserplattenelement (24) durch Abwickeln einer Faserplatte mittlerer und/oder hoher Dichte (MDF, HDF) von mindestens einer Plattenelementrolle (1000) gebildet wird.

4. Verfahren nach Anspruch 3, ferner umfassend das Abwickeln des ersten und des zweiten Plattenelementes (23, 24) von einer gemeinsamen Plattenelementrolle (1000) aus aufgewickelter mitteldichter und/oder hochdichter Faserplatte (MDF, HDF), wobei vorzugsweise der Schritt des Anbringens mindestens eines zweiten flachen Faserplattenelementes (24) oben auf den Abstandselementen (25, 26) ein Falten des zweiten flachen Faserplattenelements (24) auf das erste flache Faserplattenelement (23) umfasst, wobei die Abstandselemente (25, 26) dazwischen angeordnet sind.

5. Verfahren nach einem der vorangehenden Ansprüche, ferner umfassend Zuführen von Faserplatten mittlerer und/oder hoher Dichte (3001), die auf mindestens einer Abstandselementrolle (3000) aufgewickelt sind, Abwickeln der mittel- und/oder hochdichten Faserplatte (MDF, HDF) von der Abstandselementrolle (3000) und Schneiden der Faserplatte (3001) in Längsrichtung zur Bildung der Abstandselemente (25, 26) in Form von Streifen von Faserplatte mittlerer und/oder hoher Dichte (MDF, HDF).

6. Verfahren nach einem der vorangehenden Ansprüche, bei dem außerdem automatisch und während des laufenden Betriebs eine kurz vor der Entleerung stehende Plattenelementrolle (1000, 3000) mit Faserplatten (20) durch eine volle Plattenelementrolle ersetzt wird.

7. Verfahren nach einem der vorangehenden Ansprüche, wobei der Schritt des Glättens der Faserplattenbahn (2) das Erhitzen der Faserplatte (20) mittlerer oder hoher Dichte beinhaltet, wobei vorzugsweise das Erhitzen eine Vorrichtung (5000) beinhaltet, mit der Infrarot (IR)-Strahlung der Faserplattenbahn (2) zugeführt wird.

8. Verfahren nach Anspruch 7, wobei der Schritt des Erhitzens der Faserplattenbahn (2) das Erhitzen derjenigen Seite (30) der mittel- und/oder hochdichten Faserplatte (20) beinhaltet, die nach außen gerichtet war, als die Faserplatte mittlerer und/oder hoher Dichte (MDF, HDF) auf die mindestens eine Plattenelementrolle (1000) aufgewickelt war.

9. Verfahren nach Anspruch 8, wobei beide Seiten der Faserplattenbahn (2) erhitzt werden, und wobei die Seite (30) der Faserplattenbahn (2), die die Seite (30) der mittel- und/oder hochdichten Faserplatte (20)umfasste, die nach außen gerichtet war, als die mitteldichte und/oder hochdichte Faserplatte (20) auf der mindestens einen Elementrolle (1000) aufgewickelt war, auf eine höhere Temperatur als die andere Seite (34) erhitzt wird.

10. Verfahren nach einem der Ansprüche 7 bis 9, wobei der Grad der Erwärmung in Abhängigkeit von der vorhandenen Menge an Faserplatte mittlerer und/oder hoher Dichte (MDF, HDF) auf der mindestens einen Plattenelementrolle (1000) gesteuert wird, so dass eine größere Wärmemenge der Faserplattenbahn (2) zugeführt wird, wenn die Plattenelementrolle (1000) fast leer ist, d.h. Faserplatte (20) bei kleinem Durchmesser abgewickelt wird, als wenn die Rolle (1000) fast voll ist, d.h. die Faserplatte (20) mit einem großen Durchmesser abgewickelt wird.

11. Verfahren nach einem der vorhergehenden Ansprüche, wobei die Oberfläche der Faserplatte (20), die eine nach außen weisende Fläche (34) in dem hohlen Plattenmaterial bilden soll, eine Oberflächenrauhigkeit (Ra) von weniger als 6 Mikrometern, bevorzugter weniger als 4 Mikrometer, und vorzugsweise die Oberfläche der Faserplatte (20), die eine nach innen gerichtete Fläche (30) der Faserplatte (20) bilden soll, eine Oberflächenrauheit (Ra) von weniger als 7 Mikrometern, vorzugsweise weniger als 5 Mikrometern aufweist.

12. Verfahren nach einem der vorhergehenden Ansprüche, wobei eine Faserplatte mittlerer und/oder hoher Dichte (MDF, HDF) von der mindestens einen Plattenelementrolle (1000, 3000) in einer ersten horizontalen Ebene (H1) abgewickelt wird, wobei die Faserplattenbahn (2) dann senkrecht zu einer zweiten horizontalen Ebene (H2) bewegt wird, die sich von der ersten horizontalen Ebene (H1) unterscheidet, und horizontal in einer zweiten Richtung (D2) vorwärts bewegt wird, zumindest während des Schritts (6000, 7000) der Bildung von Abstandselementen (25, 26) auf dem ersten flachen Faserplattenelement (23) und des Schritts des Anbringens mindestens eines zweiten flachen Faserplattenelements (24) auf der Oberseite der Abstandselemente (25, 26), um eine hohe Platte (3) zu bilden.

13. Verfahren nach Anspruch 12, wobei die Faserplattenbahn (2) vor dem vertikalen Bewegen horizontal in einer ersten Richtung (D1) vorwärts bewegt wird, die entgegen der zweiten Richtung (D2) gerichtet ist.

14. Verfahren nach Anspruch 12 oder 13, wobei mindestens zwei Plattenelementrollen (1000, 3000), die aufgewickelte Faserplatten mittlerer und/oder hoher Dichte (MDF, HDF) umfassen, neben der ersten horizontalen Ebene (H1) angeordnet sind.

15. Verfahren nach einem der vorhergehenden Ansprüche, bei dem eine Folie (21), wie z.B. eine Papier- oder Polymerfolie, nach dem Schritt des Abwickelns der Faserplatte (20) von der Plattenelementrolle (1000) und vor dem Schritt (6000, 7000) der Bildung von Abstandselementen (25, 26) auf dem ersten flachen Faserplattenelement (23) aufgebracht wird, wobei die Folie (21) eine äußere Oberfläche von zumindest einem Teil der hergestellten hohlen Platte (3) bildet, wobei die Folie (21) vorzugsweise auf derjenigen Seite (34) der Faserplattenbahn (2) aufgebracht ist, die nach innen gerichtet war, als die Faserplatte mittlerer und/oder hoher Dichte (MDF, HDF) auf der mindestens einen Plattenelementrolle (1000) aufgewickelt war, wobei vorzugsweise die Faserplattenbahn (2) einer Oberflächenenergie-Behandlungseinrichtung (1500), wie z.B. einer Beflammungs-, Korona- oder Plasmabehandlung, vor dem Aufbringen der Folie (21) auf die Oberfläche (34) ausgesetzt wird.

16. Verfahren nach einem der Ansprüche 13 und 15, wobei die Folie (21) auf die Faserplattenbahn (2) während der Bewegung in der ersten Richtung (D1) aufgebracht wird.

17. Verfahren nach einem der vorhergehenden Ansprüche, wobei eine Faserplatte mittlerer und/oder hoher (MDF, HDF) von mindestens zwei Plattenelementrollen (1000, 3000) abgewickelt wird, wobei das Plattenmaterial (3001) von der zweiten Rolle (3000) geschlitzt wird, um eine Vielzahl von Abstandselementen (25, 26) zu bilden, die auf das erste flache Faserplattenelement (23) aufgebracht werden, um eine hohle Platte (3) zu bilden.

18. Maschine zum Formen von eines hohlen Plattenmaterials, die mindestens eine Abwickelstation (1003) mit mindestens einer Plattenelementrolle (1000) umfasst, die so angeordnet ist, dass sie eine Bahn aus Faserplattenmaterial (2) bildet, eine Glättungsstation (5000) zum Glätten der Bahn aus Faserplattenmaterial (2), eine Station zur Bildung von Abstandselementen (4000, 6000, 7000) zum Anbringen von Abstandselementen (25, 26) auf dem ersten flachen Faserplattenelement (23), und eine zweite Befestigungsstation (9000) zum Befestigen des zweiten flachen Faserplattenelements (24) oben auf den Abstandselementen (25, 26) zur Bildung einer hohlen Platte (3), **dadurch gekennzeichnet, dass** die Plattenelementrolle (1000) eine Faserplatte mittlerer und/oder hoher Dichte (MDF, HDF) (20) enthält und dass die Glättungsstation (5000) angeordnet ist, um erste und zweite flache Faserplattenelemente (23, 24) zu bilden.

19. Maschine nach Anspruch 18, ferner mit einer Abwickelstation (3003) für Abstandselemente (25, 26) zum Abwickeln von Faserplatte mittlerer und/oder hoher Dichte (MDF,HDF) (3001), die auf mindestens einer Abstandselementrolle (3000) aufgewickelt ist, wobei die Maschine ferner eine Station (4000, 6000, 7000) zum Bilden von Abstandselementen (25, 26) umfasst, die geeignet ist, die abgewickelte Faserplatte (3001) in Längsrichtung zu schlitzen, um die Abstandselemente (25, 26) zu bilden.

20. Maschine nach einem der Ansprüche 18-19, wobei die mindestens eine Abwickelstation (1003, 3003) ferner eine Plattenelementrollen-Austauscheinheit umfasst, um automatisch und während des laufenden Betriebs eine Plattenelementrolle (1000, 3000), die im Begriff ist, von Faserplatte (20) leer zu laufen, durch eine volle Plattenelementrolle zu ersetzen.

21. Maschine nach einem der Ansprüche 18 bis 20, **dadurch gekennzeichnet, dass** die Glättungsstation eine Heizanordnung (5000), vorzugsweise eine IR-Heizeinrichtung, zum Erwärmen der Faserstoffbahn (2) aufweist, wobei die Heizanordnung (5000) vorzugsweise so ausgebildet ist, dass sie die Seite (30) der mitteldichten oder hochdichten Faserplatte (20) erwärmt, die nach außen gerichtet war, als die mitteldichte und/oder hochdichte Faserplatte (MDF, HDF) auf die mindestens eine Plattenelementrolle (1000) aufgewickelt war.

22. Maschine nach Anspruch 21, wobei die Maschine ferner eine Steuereinheit (5001) umfasst, die so eingerichtet ist, dass sie die Zufuhr von Wärme zu der Faserplattenbahn (2) steuert und eine größere Wärmemenge an das Plattenmaterial (20) liefert, wenn die Plattenelementrolle (1000) fast leer ist, als wenn die Rolle (1000) fast voll ist.

23. Maschine nach einem der Ansprüche 18-22, **dadurch gekennzeichnet, dass** die Maschine eine Falt- und Pressvorrichtung (9000) zum Falten des zweiten flachen Faserplattenelements (24) auf die Abstandshalter (25, 26) und zum Befestigen des zweiten flachen Faserplattenelements (24) an den Abstandselementen (25, 26) aufweist, wobei vorzugsweise die Abwickelstation (1003) angeordnet ist, um das erste und zweite flache Faserplattenelement (23, 24) von einer gemeinsamen Plattenelementrolle (1000) vor der Falt- und Pressvorrichtung (9000) abzuwickeln.

24. Maschine nach einem der Ansprüche 18-23, wobei die Maschine zwei Etagen aufweist, die in zwei horizontalen Ebenen (H1, H2) übereinander angeordnet sind, wobei eine erste Ebene (H1) die mindestens eine Abwickelstation (1003, 3003) umfasst und die zweite Ebene (H2) zumindest Teile der Station zur Bildung von Abstandselementen (6000, 7000) und die Befestigungsstation für die zweite flache Faserplatte (9000) umfasst, wobei die Maschine dazu eingerichtet ist, die Faserplattenbahn (2) einschließlich der mitteldichten oder hochdichten Faserplatte (20), die von der mindestens einen Plattenelementrolle (1000) abgewickelt wurde, in einer ersten Richtung (D1) entlang der ersten horizontalen Ebene (H1) in der ersten Etage weiterzuleiten und die Faserplattenbahn (2) in einer zweiten Richtung (D2) entlang der zweiten horizontalen Ebene (H2), wobei die zweite Richtung (D2) der ersten Richtung (D1) entgegengesetzt ist, in der zweiten Etage weiterzuleiten, wobei die Maschine vorzugsweise so eingerichtet ist, um die Faserplattenbahn (2) vertikal von der ersten Ebene (H1) in die zweite Ebene (H2) zu überführen.

## Revendications

1. Procédé de formation d'un matériau de panneau au moins partiellement creux, le procédé comprenant :
la fourniture d'un panneau de fibres à moyenne et/ou haute densité (MDF, HDF) (20) enroulé sur au moins un rouleau d'éléments de panneau (1000), le déroulage du panneau de fibres à moyenne et/ou haute densité (20) à partir du rouleau (1000) pour former un mat de feuille fibreuse (2), l'aplatissement du mat de feuille fibreuse (2) pour former des premier et second éléments de panneau de fibres plats (23, 24), la fixation d'éléments d'espacement (25, 26) sur le premier élément de panneau de fibres plat (23), et la fixation dudit second élément de panneau de fibres plat (24) au-dessus des éléments d'espacement (25, 26) pour former un panneau creux (3) ayant les premier et second éléments de panneau de fibre (23, 24) reliés l'un à l'autre au moyen des éléments d'espacement (25, 26).

2. Procédé selon la revendication 1, dans lequel ledit panneau de fibres à moyenne et/ou haute densité (MDF, HDF) (20) a au moins partiellement une densité supérieure à 750 kg/m³ et dans lequel la surface du panneau de fibres (20) qui est destinée à former une face (34) tournée vers l'extérieur dans le matériau de panneau creux a une rugosité de surface (Ra) inférieure à 6 micromètres, de préférence ledit panneau de fibres (20) comporte au moins partiellement du panneau de fibres à haute densité (HDF) ayant une densité d'au moins 800 kg/m³.

3. Procédé selon la revendication 1 ou 2, comprenant en outre la formation du second élément de panneau de fibres plat (24) également par déroulage de panneau de fibres à moyenne et/ou haute densité (MDF, HDF) à partir d'au moins un rouleau d'éléments de panneau (1000).

4. Procédé selon la revendication 3, comprenant en outre le déroulage des premier et second éléments de panneau (23, 24) à partir d'un rouleau commun d'éléments de panneau (1000) de panneau de fibres à moyenne et/ou haute densité (MDF, HDF), de préférence ladite étape de fixation d'au moins un second élément de panneau de fibres plat (24) au-dessus des éléments d'espacement (25, 26) impliquant le pliage du second élément de panneau de fibres plat (24) sur le premier élément de panneau de fibres plat (23), les éléments d'espacement (25, 26) étant agencés entre ceux-ci.

5. Procédé selon l'une quelconque des revendications précédentes, comprenant en outre la fourniture d'un panneau de fibres à moyenne et/ou haute densité (3001) enroulé sur au moins un rouleau d'éléments d'espacement (3000), le déroulage du panneau de fibres à moyenne et/ou haute densité (MDF, HDF) à partir du rouleau d'éléments d'espacement (3000), et le refendage du panneau de fibres (3001) de manière longitudinale pour former lesdits éléments d'espacement (25, 26), sous la forme de bandes de panneau de fibres à moyenne et/ou haute densité (MDF, HDF).

6. Procédé selon l'une quelconque des revendications précédentes, comprenant en outre le remplacement automatique et pendant le fonctionnement d'un rouleau d'éléments de panneau (1000, 3000) de panneau de fibres (20) sur le point de se vider par un rouleau d'éléments de panneau plein.

7. Procédé selon l'une quelconque des revendications précédentes, dans lequel ladite étape d'aplatissement du mat de feuille fibreuse (2) implique le chauffage du panneau de fibres à moyenne ou haute densité (20), de préférence le chauffage implique la fourniture d'un dispositif (5000) fournissant un rayonnement infrarouge (IR) sur le mat de feuille fibreuse (2).

8. Procédé selon la revendication 7, dans lequel ladite étape de chauffage du mat de feuille fibreuse (2) implique le chauffage du côté (30) du panneau de fibres à moyenne et/ou haute densité (20) qui était tourné vers l'extérieur lorsque le panneau de fibres à moyenne et/ou haute densité (MDF, HDF) était enroulé sur l'au moins un rouleau d'éléments de panneau (1000).

9. Procédé selon la revendication 8, dans lequel les deux côtés du mat de feuille fibreuse (2) sont chauffés, et dans lequel ce côté (30) de la nappe de feuille fibreuse (2) ayant le côté (30) du panneau de fibres à moyenne et/ou haute densité (20) qui était tourné vers l'extérieur lorsque le panneau de fibres à moyenne et/ou haute densité (20) était enroulé sur l'au moins un rouleau d'éléments de panneau (1000) est chauffé à une température plus élevée que l'autre côté (34).

10. Procédé selon l'une quelconque des revendications 7 à 9, dans lequel le degré de chauffage est commandé en fonction de la quantité présente de panneau de fibres à moyenne et/ou haute densité (MDF, HDF) sur l'au moins un rouleau d'éléments de panneau (1000), de sorte qu'une quantité plus grande de chaleur est fournie au mat de feuille fibreuse (2) lorsque le rouleau d'éléments de panneau (1000) est presque vide, c'est-à-dire lorsque le panneau de fibres (20) est déroulé à un petit diamètre, que lorsque le rouleau (1000) est presque plein, c'est-à-dire lorsque le panneau de fibres (20) est déroulé à un grand diamètre.

11. Procédé selon l'une quelconque des revendications précédentes, dans lequel la surface du panneau de fibres (20) qui est destinée à former une face (34) tournée vers l'extérieur dans le matériau de panneau creux a une rugosité de surface (Ra) inférieure à 6 micromètres, de manière davantage préférée inférieure à 4 micromètres, de préférence la surface du panneau de fibres (20) qui est destinée à former une face (30) orientée vers l'intérieur dans le matériau de panneau creux a une rugosité de surface (Ra) inférieure à 7 micromètres, de manière davantage préférée inférieure à 5 micromètres.

12. Procédé selon l'une quelconque des revendications précédentes, dans lequel le panneau de fibres à moyenne et/ou haute densité (MDF, HDF) est déroulé de l'au moins un rouleau d'éléments de panneau (1000, 3000) dans un premier plan horizontal (H1), le mat de feuille fibreuse (2) étant alors déplacé verticalement vers un second plan horizontal (H2) différent dudit premier plan horizontal (H1), et étant acheminé horizontalement dans une seconde direction (D2), au moins à l'étape (6000, 7000) de formation d'éléments d'espacement (25, 26) sur le premier élément de panneau de fibres plat (23) et à l'étape de fixation d'au moins un second élément de panneau de fibres plat (24) au-dessus des éléments d'espacement (25, 26) pour former un panneau creux (3).

13. Procédé selon la revendication 12, dans lequel le mat de feuille fibreuse (2), avant d'être déplacé verticalement, est acheminé horizontalement dans une première direction (D1) opposée à ladite seconde direction (D2).

14. Procédé selon la revendication 12 ou 13, dans lequel au moins deux rouleaux d'éléments de panneau (1000, 3000) comprenant du panneau de fibres à moyenne et/ou haute densité (MDF, HDF) sont positionnés de manière adjacente audit premier plan horizontal (H1).

15. Procédé selon l'une quelconque des revendications précédentes, dans lequel une feuille (21), telle qu'une feuille de papier ou de polymère, est appliquée sur le mat de feuille fibreuse (2) après ladite étape de déroulage du panneau de fibres (20) à partir du rouleau d'éléments de panneau (1000) et avant ladite étape (6000, 7000) de formation d'éléments d'espacement (25, 26) sur le premier élément de panneau de fibres plat (23), ladite feuille (21) formant une surface externe d'au moins une partie du panneau creux produit (3), de préférence ladite feuille (21) est appliquée sur le côté (34) du mat de feuille fibreuse (2) qui était tourné vers l'intérieur lorsque le panneau à moyenne et/ou haute densité (MDF, HDF) était enroulé sur l'au moins un rouleau d'éléments de panneau (1000), de préférence le mat de feuille fibreuse (2) est exposé à un dispositif de traitement de surface par énergie (1500), tel qu'un dispositif de traitement par flammage, de traitement corona ou de traitement plasma, avant l'application de la feuille (21) sur la surface (34).

16. Procédé selon les revendications 13 et 15, dans lequel ladite feuille (21) est appliquée sur le mat de feuille fibreuse (2) pendant le déplacement dans ladite première direction (D1).

17. Procédé selon l'une quelconque des revendications précédentes, dans lequel un panneau de fibres à moyenne et/ou haute densité (MDF, HDF) est déroulé à partir d'au moins deux rouleaux d'éléments de panneau (1000, 3000), le matériau de panneau (3001) provenant du second rouleau (3000) étant refendu pour former une pluralité d'éléments d'écartement (25, 26) qui sont appliqués sur le premier élément de panneau de fibres plat (23), pour former un panneau creux (3).

18. Machine de formation de matériau de panneau creux, comprenant au moins un poste de déroulage (1003) avec au moins un rouleau d'éléments de panneau (1000) conçu pour former un mat de feuille fibreuse (2), un poste d'aplatissement (5000) pour aplatir la nappe de feuille fibreuse (2), un poste de formation d'éléments d'espacement (4000, 6000, 7000) pour fixer des éléments d'espacement (25, 26) sur le premier élément de panneau de fibres plat (23) et un poste de fixation de second panneau plat (9000) pour fixer ledit second élément de panneau de fibres plat (24) au-dessus des éléments d'espacement (25, 26) pour former un panneau creux (3), **caractérisée en ce que** ledit rouleau d'éléments de panneau (1000) contient un panneau de fibres à moyenne et/ou haute densité (MDF, HDF) (20) et **en ce que** ledit poste d'aplatissement (5000) est conçu pour former des premier et second éléments de panneau de fibres plat (23, 24).

19. Machine selon la revendication 18, comprenant en outre un poste de déroulage (3003) d'éléments d'espacement (25, 26) pour dérouler un panneau de fibres à moyenne et/ou haute densité (MDF, HDF) (3001) enroulé sur au moins un rouleau d'éléments d'espacement (3000), la machine comprenant en outre un poste de formation (4000, 6000, 7000) d'éléments d'espacement (25, 26) adapté pour refendre le panneau de fibres déroulé (3001) de manière longitudinale pour former les éléments d'espacement (25, 26).

20. Machine selon l'une quelconque des revendications 18 à 19, dans laquelle ledit au moins un poste de déroulage (1003, 3003) comprend en outre une unité de remplacement de rouleau d'éléments de panneau pour remplacer automatiquement et pendant le fonctionnement un rouleau d'éléments de panneau (1000, 3000) de panneau de fibres (20) sur le point de se vider par un rouleau d'éléments de panneau plein.

21. Machine selon l'une quelconque des revendications 18 à 20, dans laquelle le poste d'aplatissement comprend un agencement de chauffage (5000), de préférence un agencement de chauffage IR, pour chauffer le mat de feuille fibreuse (2), de préférence l'agencement de chauffage (5000) est adapté pour chauffer le côté (30) du panneau de fibres à moyenne et/ou haute densité (20) qui était tourné vers l'extérieur lorsque le panneau de fibres à moyenne et/ou haute densité (MDF, HDF) était enroulé sur l'au moins un rouleau d'éléments de panneau (1000).

22. Machine selon la revendication 21, dans laquelle la machine comprend en outre une unité de commande (5001) conçue pour commander la fourniture de chaleur sur le mat de feuille fibreuse (2) et pour fournir une plus grande quantité de chaleur au matériau de panneau (20) lorsque le rouleau d'éléments de panneau (1000) est presque vide que lorsque le rouleau (1000) est presque plein.

23. Machine selon l'une quelconque des revendications 18 à 22, dans laquelle la machine comprend un dispositif de pliage et de pressage (9000) pour plier le second élément de panneau de fibres plat (24) sur les éléments d'espacement (25, 26) et fixer le second élément de panneau de fibres plat (24) sur les éléments d'espacement (25, 26), de préférence le poste de déroulage (1003) étant conçu pour dérouler les premier et second éléments de panneau de fibres plat (23, 24) à partir d'un rouleau d'éléments de panneau commun (1000) en amont du dispositif de pliage et de pressage (9000).

24. Machine selon l'une quelconque des revendications 18 à 23, dans laquelle la machine comprend deux étages agencés en deux plans horizontaux (H1, H2) l'un au-dessus de l'autre, dans laquelle un premier plan (H1) comprend l'au moins un poste de déroulage (1003, 3003) et le second plan (H2) comprend au moins des parties du poste de formation d'éléments d'écartement (6000, 7000) et le poste de fixation de second panneau plat (9000), dans laquelle la machine est conçue pour acheminer le mat de feuille fibreuse (2) comprenant le panneau de fibres à moyenne et/ou haute densité (20) déroulé à partir de l'au moins un rouleau d'éléments de panneau (1000) dans une première direction (D1), le long dudit premier plan horizontal (H1), sur le premier étage, et pour acheminer le mat de feuille fibreuse (2) dans une seconde direction (D2) le long dudit second plan horizontal (H2), laquelle seconde direction (D2) est opposée à la première direction (D1), sur le second étage, dans laquelle de préférence la machine est adaptée pour transférer le mat de feuille fibreuse (2) verticalement à partir du premier plan (H1) vers le second plan (H2).
